(19) Europäisches Patentamt
European Patent Office
Office européen des brevets

(11) **EP 2 437 113 A1**

(12) **EUROPEAN PATENT APPLICATION**
published in accordance with Art. 153(4) EPC

(43) Date of publication:
**04.04.2012 Bulletin 2012/14**

(51) Int Cl.:
***G02F 1/167*** (2006.01)    ***G02F 1/17*** (2006.01)

(21) Application number: **10780306.6**

(22) Date of filing: **28.05.2010**

(86) International application number:
**PCT/JP2010/003618**

(87) International publication number:
**WO 2010/137346 (02.12.2010 Gazette 2010/48)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 JP 2009131236**

(71) Applicant: **Bridgestone Corporation**
**Tokyo 104-8340 (JP)**

(72) Inventors:
• **ANZAI, Hiroyuki**
**Kodaira-shi**
**Tokyo 187-8531 (JP)**

• **ARAI, Toshiaki**
**Kodaira-shi**
**Tokyo 187-8531 (JP)**

(74) Representative: **Oxley, Robin John George**
**Marks & Clerk LLP**
**90 Long Acre**
**London**
**WC2E 9RA (GB)**

(54) **PARTICLES FOR DISPLAY MEDIUM AND PANEL FOR INFORMATION DISPLAY USING THE PARTICLES FOR DISPLAY MEDIUM**

(57)    A particle for a display medium that can be used in an information display panel in which a display medium having an optical reflectivity and an electrification property is sealed between two substrates, at least one of which substrates is transparent; electrification is applied to the display medium to move the display panel, thereby to display an information image, in which an external additive is attached to a surface of a mother particle serving as a main body of a particle, and, the external additive has a first external additive particle having a smaller particle diameter formed such that an average particle diameter falls in a range of 7 nm to 8 nm and 80 wt% or more of the entire first external additive particle has a particle diameter falling within ±2 nm from the average particle diameter, and a second external additive particle having a larger particle diameter formed such that 10 wt% or lower of the entire second external additive particle has a particle diameter of 10 nm or lower.

EP 2 437 113 A1

**Description**

TECHNICAL FIELD

The present invention relates to a technique of an information display panel in which a display medium is sealed between two substrates, at least one of which panel substrates is transparent, and the display medium is made moved, thereby to display information such as an image. More specifically, the present invention relates to a particle constituting the display medium (hereinafter, referred to as particle for a display medium) and formed by attaching an external additive to a surface of a mother particle constituting a base body of the particle.

RELATED ART

As an information display device, a liquid crystal display device (LCD) has been widely used. However, in general, it has been known that the liquid display device consumes a large amount of electric power, and has various drawbacks such as a narrow viewing angle. In view of the facts above, as a substitute for the liquid crystal display device, there is proposed an information display panel in which: plural cells sectioned by a partition wall are formed between two substrates (for example, glass substrates), at least one of which substrates is transparent; a display medium comprised of a particle group is sealed in the cells; and the display medium is moved, thereby to display information such as an image.

The information display panel as described above displays a desired image and the like, for example, by electrically moving the display medium existing between the substrates in accordance with information such as an image. In this information display panel, a particle (particle group) for a display medium repeatedly moves in a space between the substrates in accordance with information for which displaying is requested. After the movement of the particle, the panel can maintain its state and keep displaying the image and the like in a stable manner during a period of time when the next electric field is not applied for rewriting, so that the electric power consumption can be reduced.

As described above, for the particle for a display medium used in the information display panel, a particle having an external additive attached on a surface of a mother particle has been studied for the purpose of improving the stability of electrical characteristics, flowability, electrification property and the like. For example, Patent Document 1 discloses a particle for a display medium in which an external additive is attached to a mother particle having a certain degree or more of stiffness. With this configuration, it is possible to prevent the external additive from excessively burying into the mother particle, whereby it is possible to secure the necessary electrification property and flowability to improve the use-durability for repetitive display and rewriting.

RELATED ART DOCUMENT

PATENT DOCUMENT

Patent Document 1: Japanese Patent Application Laid-open No. 2006-64815

DISCLOSURE OF THE INVENTION

PROBLEMS TO BE SOLVED BY THE INVENTION

However, when a particle for a display medium existing in the information display panel is moved for rewriting the display, various forces act on the particle. For example, there act the cohesive force by which particles stick together, and the adhesive force by which particles attach to electrode substrates. The information display panel performs displaying by applying voltage across electrodes provided at predetermined positions to drive the particle for a display medium in a direction of electric field. In order to reversely move the particle for a display medium for rewriting the display, it is necessary to make a driving force, caused by the voltage generated on the side of the information display panel, larger than the cohesive force or adhesive force of the particle.

In the case where the cohesive force or the adhesive force of the particles for a display medium is strong, higher voltage is required to drive the particles because the driving force described above is in proportion to the voltage applied. In such a case, a display driving circuit has to be designed so as to withstand the higher voltage, which leads to an increase in the cost of manufacturing the information display panel. Further, in general, parts for the driving voltage driver used in the display design are more expensive as the voltage in the specification increases, which leads to an increase in the manufacturing cost.

Therefore, in order to reduce the cost, it is important to design the particle for a display medium used in the information display panel so as to be able to be driven at a lower voltage. However, conventionally, the satisfactory particle for a display medium has not yet been provided. Further, there is a demand for a particle for a display medium capable of stably performing displaying with an initial low-driving voltage while having use-durability for a long period of time.

In view of the facts described above, an object of the present invention is to propose a particle for a display medium having an external additive attached and capable of driving for a long period of time with a lower voltage.

MEANS FOR SOLVING THE PROBLEM

The object described above can be achieved by a particle for a display medium that can be used in an information display panel in which a display medium having an optical reflectivity and an electrification property is sealed between two substrates, at least one of which substrates is transparent; electrification is applied to the display medium to move the display medium, thereby to display an information image, wherein an external additive is attached to a surface of a mother particle serving as a main body of a particle, and, the external additive has a first external additive particle having a smaller particle diameter formed such that an average particle diameter falls in a range of 7 nm to 8 nm and 80 wt% or more of the entire first external additive particle has a particle diameter falling within $\pm 2$nm of the average particle diameter, and a second external additive particle having a larger particle diameter formed such that 10 wt% or lower of the entire second external additive particle has a particle diameter of 10 nm or lower.

Further, it is preferable that a mixing ratio of the second external additive particle is in the range of 20 wt% to 80 wt% relative to the entire external additive in the case where the average particle diameter of the second external additive is in the range of 30 nm to 40 nm.

Yet further, it is preferable that the mixing ratio of the second external additive particle is in the range of 30 wt% to 80 wt% relative to the entire external additive in the case where the average particle diameter of the second external additive is not less than 20 nm and less than 30 nm.

Yet further, it is preferable that the mixing ratio of the second external additive particle is in the range of 20 wt% to 70 wt% relative to the entire external additive in the case where the average particle diameter of the second external additive is more than 40 nm and not more than 100 nm.

Yet further, it is preferable that an entire combination ratio of the external additive is in the range of 2 wt% to 5 wt% relative to the mother particle.

Yet further, it is preferable that the first external additive particle and the second external additive particle are fine particles made of silica.

With an information display panel employing the particle for a display medium as described above, it is possible to provide a display device that can be manufactured with a low cost and can drive the particle for a display panel for a long period of time with a lower voltage.

EFFECT OF THE INVENTION

According to the particle for a display medium of the present invention, the first external additive particle having a smaller particle diameter improves the flowability and the electrification property, thereby achieves a function of driving the particle with a lower driving voltage (function of reducing the driving voltage). The second external additive particle having a larger particle diameter achieves a function of preventing the breakage of the first external additive particle (function of protecting the smaller particle). With the reduced driving voltage due to the external additive particle having the smaller particle diameter, and the protection of the smaller particle by the larger-diameter particle, it is possible to drive the particle for a display medium employing the external additive formed by two types of the particles described above for a long period of time with a low voltage. Since an information display panel employing the particle for a display medium as described above can be manufactured with a lower cost, it is possible to provide it with a low price.

BRIEF DESCRIPTION OF THE DRAWINGS

FIG. 1(a) and FIG. 1(b) are diagrams for explaining a principle configuration of an information display panel in which chargeable particles are moved, as an example of use of a particle for a display medium manufactured by a manufacturing method according to the present invention.

FIG. 2(a) and FIG. 2(b) are diagrams for explaining other principle configuration of the information display panel in which chargeable particle are moved, as an example of use of a particle for a display medium manufactured by the manufacturing method according to the present invention.

BEST MODE FOR CARRYING OUT THE INVENTION

Hereinbelow, a configuration of a particle suitable as a particle for a display medium according to an embodiment of the present invention will be described in detail with reference to the drawings. In this specification, a chargeable particle is employed as the particle for a display medium to facilitate understanding of the present invention, and, a description will be first made of a schematic configuration of a movement-type information display panel in which this particle for a display medium is moved to display an image and the like as one example.

The information display panel using a chargeable-particle movement system has a particle group formed by a combined-type display-medium particle having a chargeable mother particle and a sub-particle on a surface of the mother particle. In the information display panel, the particle group is sealed in a space between two opposing substrates, and an electric field is applied to the particle group. The particle for a display medium is drawn by a force resulting from the electric field or coulomb force along the direction of the applied electric field, and moves according to changes of the direction of the applied electric field, whereby information such as an image is displayed. Therefore, the information display panel is required to be designed so as to be able to move the particle for a display medium in a uniform manner while maintaining stability at the time of repeatedly rewriting the display information or at the time of continuously displaying the display information. The force acting on the particle for a display medium constituting the display medium may include a force caused by the electric field, a drawing force resulting from a coulomb force of each particle, electric image force with the electrode or substrate, intermolecular force, liquid cross-linking force, gravity and the like.

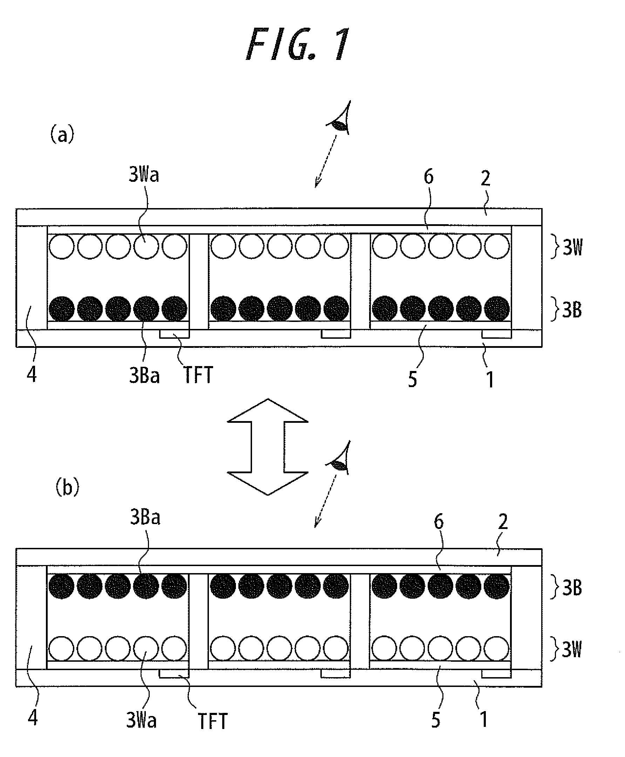

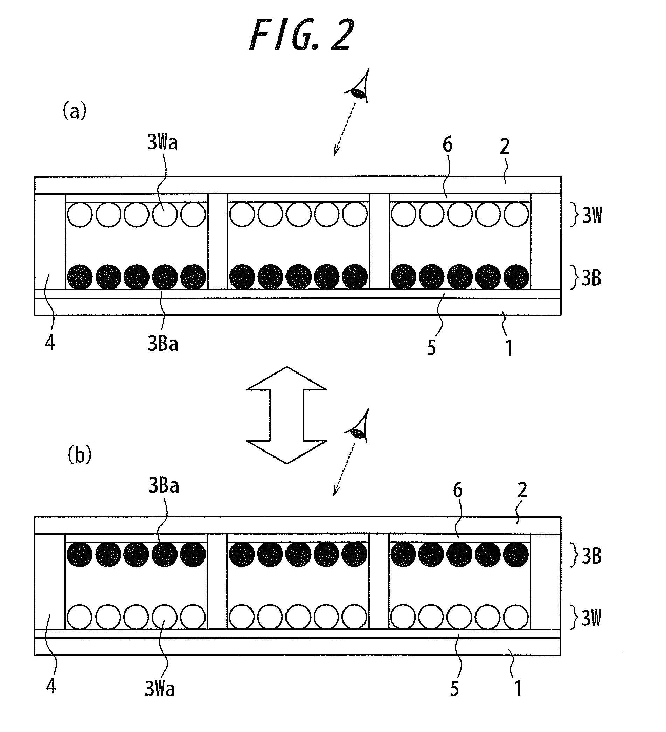

Examples of the information display panel employing the particle for a display medium according to the present invention as the display medium will be described with reference to FIGS. 1(a) and 1(b) and FIGS. 2(a) and 2(b). In an example illustrated in FIGS. 1(a) and 1(b), at least two types of display media (in this example, a white color display medium 3W comprised of a particle group containing negatively electrified white color particles 3Wa and a black color display medium 3B comprised of a particle group containing positively electrified black color particles 3Ba are illustrated) comprised of particle groups containing display medium particles having at least an optical reflectivity and an electrification property, which are different between the display medium types, are moved perpendicular to substrates 1, 2 in each cell formed by partition walls 4 in accordance with an electric field generated by applying a voltage across a pair of electrodes formed by an electrode 5 (pixel electrode with TFT) provided to the substrate 1 and an electrode 6 (common electrode) provided to the substrate 2. Then, a white display is performed by making the white color display medium 3W visually recognized by an viewer as illustrated in FIG. 1(a), or a black display is performed by making the black color display medium 3B visually recognized by the viewer as illustrated in FIG. 1(b), whereby dot-matrix display of white and black can be performed.

Note that, in FIGS. 1(a) and 1(b), a partition wall existing at the frontward side is omitted. Each of the electrodes 5 and 6 may be provided to the outer side of the substrates 1, 2, or the inner side of the substrates 1, 2, or be provided so as to be embedded in the substrates. In the drawings, a one-to-one correspondence between the pixel (dot) and the cell is illustrated as an example. However, it may be possible to employ a configuration in which the pixel does not correspond to the cell.

Further, in an example illustrated in FIGS. 2(a) and 2(b), at least two types of display media (in this example, a white color display medium 3 W comprised of a particle group containing negatively electrified white color particles 3Wa and a black color display medium 3B comprised of a particle group containing positively electrified black color particles 3Ba are illustrated) comprised of particle groups containing particles having at least an optical reflectivity and an electrification property, which are different between the display medium types, are moved perpendicular to substrates 1, 2 in each cell formed by partition walls 4 in accordance with an electric field generated by applying a voltage across a pair of pixel electrodes formed by an electrode 5 (line electrode) provided to the substrate 1 and an electrode 6 (line electrode) provided to the substrate 2 in a manner that the respective electrodes face each other and perpendicularly intersect each other. Then, a white display is performed by making the white color display medium 3W visually recognized by a viewer as illustrated in FIG. 2(a), or a black dot display is performed by making the black color display medium 3B visually recognized by the viewer as illustrated in FIG. 2(b), whereby dot-matrix display of white and black can be performed.

Note that, in FIGS. 2(a) and 2(b), a partition wall existing at the frontward side is omitted. Each of the electrodes 5 and 6 may be provided to the outer side of the substrates 1, 2, or the inner side of the substrates, or be provided so as to be embedded in the substrates. In the drawings, a one-to-one correspondence between the pixel (dot) and the cell is illustrated as an example. However, it may be possible to employ a configuration in which the pixel does not correspond to the cell.

It should be noted that, for the substrates 1 and 2 described above, it may be possible to employ a substrate such as a glass substrate, a resin sheet substrate, and a resin film substrate. The substrate 2 provided on the display surface side (on the viewer side) is a transparent substrate. In the case where an electrode for applying a predetermined voltage having a positive or negative polarity (common electrode or line electrode 5, which has been described with reference, for example, to FIG. 1) is provided in a screen area of the substrate 2 where information is displayed, this electrode is a transparent electrode. A pixel electrode with a thin film transistor (TFT) or a line electrode is provided to the surface of the substrate 1 constituting the information display panel illustrated in FIG. 1 and FIG. 2 so as to form a matrix-like electrode pair. By applying a voltage across the pair of the opposing electrodes, the electric filed is applied to the display media (particle group) to move the display media, whereby the above-described structure for performing a desired display can be realized.

Next, the particle for a display medium, to which the present invention relates, will be described in detail. The particle for a display medium according to the present invention is applicable to the information display panel illustrated in FIGS. 1(a) and 1(b) and FIGS. 2(a) and 2(b), constitutes the display medium, and is sealed between two substrates, at least one of which is transparent.

In particular, the particle for a display medium according to the present invention is a particle formed by attaching an external additive to a surface of a mother particle. As described above, in general, the external additive having one size (particle diameter) has been used for improving the flowability and the electrification property of the particle for the display medium. However, since the external additive is a fine particle with a nano-level (nm) particle diameter, it is extremely difficult to control the particle diameter so as to be a predetermined value. Therefore, actually, the external additive having a particle diameter falling in a certain range (for example, 7 to 8 nm) has been used as the external additive having the one size.

On the other hand, the particle for a display medium according to the present invention employs an external additive formed by a first external additive particle having a smaller particle diameter and a second external additive particle having a larger particle diameter. With this configuration, the particle for a display medium according to the present invention improves the flowability and the electrification property so as to be able to be driven with a lower electric current while maintaining the properties for a long period of time. Below, the particle for a display medium according to the present invention will be described sequentially.

Here, the mother particle serving as a main body of the particle for a display medium will be described. Depending on application, a charging control agent, colorant, inorganic additive and the like may be added to a base resin, which is a main component of the mother particle. Examples of the resins, charging control agent, colorant, and other additives will be described below.

In the mother particle of the particle for a display medium, the base resin, which is the main component of the mother particle, contains a pigment as the colorant, and may further contain the charging control agent, the inorganic additive and the like depending on application. Examples of the resin, charging control agent, colorant, and other additives will be described below.

Examples of the resins for the mother particle include a urethane resin, urea resin, acrylic resin, polyester resin, acrylic urethane resin, acrylic urethane silicone resin, acrylic urethane fluororesin, acrylic fluororesin, silicone resin, acrylic silicone resin, epoxy resin, polystyrene resin, styrene-acrylic resin, polyolefin resin, butyral resin, vinylidene chloride resin, melamine resin, phenol resin, fluororesin, polycarbonate resin, polysulfone resin, polyether resin, and polyamide resin, and two or more resins described above may be mixed. It may be possible to use a resin obtained by subjecting a resin polymerized in advance to a crushing process, or a resin formed by suspension polymerization. In the case of the suspension polymerization, it is preferable to use the acrylic resin, acrylic fluororesin, polystyrene resin, and styrene-acrylic resin from the viewpoint of easiness.

There is not any particular limitation for the charging control agent, but examples of negative charging control agents include, for example, salicylic acid metal complex, metal-containing azo dye, metal-containing (including metal ion or metal atom) oil-soluble dye, quaternary ammonium salt-based compound, calixarene compounds, boron containing compound (benzilic acid boron complex), and nitroimidazole derivative. Examples of positive charging control agents include nigrosine dye, triphenylmethane-based compound, quaternary ammonium salt-based compound, polyamine resin, and imidazole derivative. Additionally, it may be possible to employ, as the charging control agent, ultrafine particle silica; ultrafine particle titanium oxide; metallic oxides such as ultrafine particle alumina; nitrogen containing ring compound such as pyridine and its derivative or salt; and resin containing various kinds of organic pigments, fluorine, chlorine and nitrogen.

As exemplified below, various types and colors of organic and inorganic pigments and dyes may be used as the colorant. The black colorant includes carbon black, copper oxide, manganese dioxide, aniline black, active carbon and the like. The blue colorant includes C.I. pigment blue 15:3, C.I. pigment blue 15, iron blue, cobalt blue, alkali blue lake, victoria blue lake, phthalocyanine blue, metal-free phthalocyanine blue, partially chlorinated phthalocyanine blue compound, first sky blue, indanthrene blue BC and the like. The red colorant includes colcothar, cadmium red, red lead, mercury sulfide, cadmium, permanent red 4R, lithol red, pyrazolone red, watching red, calcium salt, lake red D, brilliant carmine 6B, eosine lake, rhodamine lake B, alizarin lake, brilliant carmine 3B, C.I.pigment red 2 and the like.

The yellow colorant includes chrome yellow, zinc yellow, cadmium yellow, yellow iron oxide, mineral first yellow, nickel titanium yellow, navel yellow, naphthol yellow S, hansa yellow G, hansa yellow 10G, benzidine yellow G, benzidine yellow GR, quinoline yellow lake, permanent yellow NCG, tartrazine lake, C.I. pigment yellow 12 and the like. The green colorant includes chrome green, chromium oxide, pigment green B, C.I. pigment green 7, Malachite green lake, final yellow green G and the like. The orange colorant includes red chrome yellow, molybdenum orange, permanent orange GTR, pyrazolone orange, Balkan orange, indunsren brilliant orange RK, benzidine orange G, Indusren brilliant orange GK, C.I. pigment orange 31 and the like. The purple colorant includes manganese purple, first violet B, methyl violet lake and the like. The white colorant includes zinc oxide, titanium oxide, antimony white, zinc sulfide and the like.

The extender includes baryta powder, barium carbonate, clay, silica, white carbon, talc, alumina white and the like. Further, as various dyes such as basic dye, acidic dye, dispersion dye, direct dye and the like, there are nigrosine, methylene blue, rose bengal, quinoline yellow, ultramarine blue and the like.

Examples of inorganic additives include titanium oxide, zinc oxide, zinc sulfide, antimony oxide, calcium carbonate, white lead, talc, silica, calcium silicate, alumina white, cadmium yellow, cadmium red, cadmium orange, titanium yellow, iron blue, ultramarine blue, cobalt blue, cobalt green, cobalt violet, iron oxide, carbon black, manganese ferrite black, cobalt ferrite black, copper powder, aluminum powder and the like.

Each of the pigments and inorganic additives described above may be used alone or in combination. In particular, among the colorants described above, carbon black is preferable as the black pigment, and titanium oxide is preferable as the white pigment. The mother particle, which is a precursor of the particle for the display medium, having a desired color can be prepared by mixing the colorants described above.

It should be noted that the mother particle serving as the main body of the particle for the display medium according to the present application may be a single particle, or may be a combined-type particle formed by disposing the other particle (sub-particle) on the surface of the mother particle. In the case of the combined-type particle, for example, the sub-particle is fixed on or embedded in a surface of the body of the mother particle having a larger size, and on the outer side of the mother particle and sub-particle, the smallest external additive is attached to form the particle for a display medium.

The particle for a display medium according to the present invention has a novel structure in which two types of the external additives, one having a larger particle diameter and the other having a smaller particle diameter, are attached on the surface of the mother particle. More specifically, the present invention employs the external additive containing a first external additive particle group having a smaller particle diameter, and a second external additive particle group having a larger particle diameter. The first external additive particle group with a smaller particle diameter has an average particle diameter (primary particle diameter) in the range of 7 nm to 8 nm, and 80wt% or more of the entire first external additive particle group has a particle diameter falls within $\pm 2$nm from the median thereof. Further, 10wt% or lower of the entire second external additive particle group with a larger particle diameter has a particle diameter of 10 nm or lower. As the external additives, silica is preferably employed.

The silica used for the external additive and having the smaller particle diameter can be synthesized, for example, through a flame method using $SiCl_4$, and the silica having the larger particle diameter can be prepared through a sedimentation method or a wet method using a silica gel. These silica additives are preferably subjected to a hydrophobic process.

The mixing ratio of the second external additive particle having the larger diameter is preferably in the range of 20 wt% to 80 wt% relative to the entire external additive. In the case where the ratio of the external additive particle having the larger diameter is less than 20 wt%, the particles are likely to stick together, while, in the case where the ratio is more than 80 wt%, the flowability deteriorates, and hence, the particles are likely to stick together in a similar manner. For example, the mixing ratio of the second external additive particle is preferably in the range of 20 wt% to 80 wt% relative to the entire external additive in the case where the average particle diameter is in the range of 30 nm to 40 nm. Further, the mixing ratio is preferably in the range of 30 wt% to 80 wt% relative to the entire external additive in the case where the average particle diameter is not less than 20 nm and less than 30 nm. Yet further, the mixing ratio is preferably in the range of 20 wt% to 70 wt% relative to the entire external additive in the case where the average particle diameter is more than 40 nm and not more than 100 nm.

Yet further, the entire combination ratio of the external additive is preferably in the range of 2 wt% to 5 wt% relative to the mother particle.

This range is preferable because, in the case where the ratio is less than 2 wt%, the flowability cannot be obtained sufficiently, and in the case where the ratio is more than 5 wt%, the problem of detachment from the mother particle is highly likely to occur.

The present inventor observed states of the external additives attached on the surface of the mother particle, and confirmed that the conventional external additive is likely to break when used for a long period of time, although the conventional external additive contributes to driving the particle with a lower voltage since it can improve the flowability and the like. In the case where the display is rewritten repeatedly, the external additive is likely to stick together when broken, and hence, there arises a problem of increase in the driving voltage pointed out above. According to the particle for a display medium of the present application, a particle having a smaller particle diameter and functioning so as to improve the flowability and the like as is the case with the conventional external additive is mixed with a larger particle having, for example, a particle diameter 1.5 to 10 times larger than that of the smaller particle to obtain an external additive, and the thus obtained mixture is attached to the surface of the mother particle. With this configuration, the external additive having the smaller particle diameter sufficiently functions to improve the flowability to drive the particle with a lower driving voltage, and the external additive having the larger particle diameter functions to prevent the breakage of the smaller-diameter particle. Therefore, the particle for a display medium according to the present invention provides a particle for a display medium that can be driven with a lower driving voltage while maintaining this property for a long period of time.

Next, a description will be made for components constituting the information display panel employing the particle for a display medium according to the present invention.

As for the substrates described above, at least one of the substrates is a transparent substrate through which a color of the display medium can be recognized from the outside of the panel, and is formed preferably of a material having high transmissivity for the visible light and favorable heat-resisting property. On the other hand, the substrate on the rear surface side, which is the other substrate, may be transparent, or may not be transparent. Examples of materials of the substrates include an organic-polymer-based substrate such as polyethylene terephthalate (PET), polyethylene naphthalate (PEN), polyethylene (PE), polycarbonate (PC), polyimide (PI), polyethersulfone (PES) and acrylic, a glass sheet, a quartz sheet, and a metal sheet. Among the materials described above, a transparent material is used for the display surface side. The thickness of the substrate is preferably in the range of 2 $\mu$m to 2000 $\mu$m, and more preferably in the range of 5 $\mu$m to 1000 $\mu$m. In the case where the substrate is excessively thin, it is difficult to maintain the strength and the uniformity of the distance between the substrates. On the other hand, in the case where the thickness exceeds 2000 $\mu$m, inconvenience occurs at the time of making the display panel thinner.

Examples of materials for forming the electrode provided to the substrates include: metals such as aluminum, silver, nickel, copper and gold; electrically conductive metallic oxides such as indium tin oxide (ITO), indium zinc oxide (IZO), aluminum-doped zinc oxide (AZO), indium oxide, conductive tin oxide, antimony tin oxide (ATO) and conductive zinc oxide; and electrically conductive polymers such as polyaniline, polypyrrole and polythiophene. Depending on applications, a material/materials used for forming the electrode is/are selected from the materials described above. As a method of forming the electrodes, it is possible to use: a method of patterning the materials exemplified above in a thin film shape by using a sputtering method, a vacuum deposition method, a chemical vapor deposition (CVD) method and a coating method; a method of laminating metal foils (for example, rolling copper-foil method); and a method of performing pattern formation by applying a mixture of conductive agent with solvent or synthetic resin binder. The electrode provided to the screen area where information is displayed of the substrate on the viewer side (display surface side) needs to be transparent, whereas it is not necessary for the electrode provided to an area other than the screen area where the information is displayed or on the substrate on the rear surface side to be transparent. In any case, it is possible to preferably use the above-described electrically conductive materials that can be used for pattern formation. Note that the thickness of the electrodes is set by taking the conductivity and optical transparency into consideration, and is in the range of 0.01 $\mu$m to 10 $\mu$m, preferably, in the range of 0.05 $\mu$m to 5 $\mu$m. The material and thickness of the electrode provided to the substrate on the rear surface side are set similarly to those set for the electrode provided to the substrate on the display surface side, but the electrode provided to the substrate on the rear surface side does not need to be transparent.

Depending on application, a shape of a partition wall provided to the substrate is optimally set in accordance with types of the display medium concerning display, and shapes and arrangement of the electrode to be disposed, and is not limited flatly. However, the width of the partition wall is set in the range of 2 $\mu$m to 100 $\mu$m, preferably, in the range of 3 $\mu$m to 50 $\mu$m. The height of the partition wall may be set within a gap between the substrates. A portion for securing a gap between the substrates may be set so as to match the gap between the substrates. A portion other than the portion for securing the gap may be set to the height same as the gap between the substrates or to the height lower than the gap between the substrates. Further, it is considered that the partition wall is formed by a both-rib method of forming ribs on both of the opposing substrates 1, 2 and then connecting them, or by a single-rib method in which a rib is formed only on the single side substrate of the two substrates. In the present invention, either method can be preferably used. Although the height of the partition wall is set so as to correspond to the distance between the substrates, part of the height may be set so as to be lower than the distance between the substrates. Examples of shapes of the cells formed by the partition wall formed by the rib described above include a quadrangle shape, triangle shape, line shape, circle shape and hexagonal shape when viewed from the direction of the substrate plane, and examples of arrangement thereof include a lattice arrangement, honeycomb arrangement and network arrangement. It is desirable that a portion corresponding to a sectional area of the partition wall when viewed from the display surface side (area of frame portion of the cell) is set as small as possible, so that sharpness of the displaying state can be increased. Examples of the method of forming the partition wall include a mold transfer method, a screen printing method, a sandblast method, a photolithographic method, and an additive method. Any of the methods described above can be preferably applied to the information display panel provided to the information display device according to the present invention, but, among the methods described above, the photolithographic method using a resist film or the mold transfer method is preferably used.

Further, it is preferable that the particles for a display medium have an average particle diameter d(0.5) in the range of 1 μm to 20 μm, and the respective particles have a uniform size. In the case where the average particle diameter d(0.5) exceeds this range, the sharpness on the display deteriorates, and, on the other hand, in the case where the average particle diameter is smaller than this range, a cohesive force between the particles becomes undesirably large, which adversely affects the movement of the particles as the display medium.

Further, in the present invention, regarding the particle diameter distribution of the particles for a display medium, it is desirable that a particle diameter distribution Span, which is defined by the following expression, is less than 5, preferably less than 3.

$$\mathrm{Span} = (d(0.9) - d(0.1))/d(0.5)$$

(where, d(0.5) indicates a value of the particle diameter expressed by μm in which 50% of the particles have a diameter larger than this value and 50% of the particles have a diameter smaller than this value, d(0.1) indicates a value of the particle diameter expressed by μm in which a percentage of the particles having a diameter smaller than or equal to this value is 10%, and d(0.9) indicates a value of the particle diameter expressed by μm in which a percentage of the particles having a diameter smaller than or equal to this value is 90%.)

By setting the Span to less than or equal to 5, the sizes of the particles are made uniform and the particles can move as the uniform display medium.

Yet further, in the case of the information display panel employing two types of display media formed by two types of particles for a display medium having different electrification polarities, it is important that a ratio of the average particle diameter of the display medium having the larger average particle diameter d(0.5) relative to the average particle diameter of the display medium having the smaller average particle diameter d(0.5) is set to 10 or lower. Even if the particle diameter distribution Span is reduced, the particles for a display medium having different electrification polarities from each other are moved in the opposite directions to each other, and hence, it is preferable that the sizes of the particles are formed so as to be substantially equal to each other in order to make the respective particles for a display medium easily moved in the opposite directions, which is realized by the above-described range.

It should be noted that the particle diameter distribution and the particle diameters described above can be obtained, for example, with a laser diffraction/scattering method. By emitting a laser light to the particles to be measured, a light intensity distribution pattern of a diffraction/scattering light appears spatially. This light intensity pattern is in the relationship with the particle diameter, and hence, the particle diameters and the particle diameter distribution can be obtained.

In the present invention, the particle diameters and the particle diameter distribution are obtained on the basis of the volume-based distribution. For example, the particle diameters and the particle diameter distribution are measured with a measurement unit Mastersizer 2000 (Sysmex Corporation) and the attached analysis software by inserting particles into a stream of nitrogen gas.

Further, in the case of a dry-type information display panel in which display media formed by the particle for a display medium are driven in a space filled with gas, it is important to manage the gas located in the space between the panel substrates and surrounding the display media, which contributes to improvement of display stability. More specifically, it is important to set a relative humidity of the gas in the space to 60%RH or lower at 25°C, preferably, to 50%RH or lower.

The space described above refers to a portion existing between the opposing substrate 1 and substrate 2 in FIGS. 1(a) and 1(b) through FIGS. 2(a) and 2(b) and excluding the electrodes 5, 6 (in the case where the electrodes are provided on the inner side of the substrates), a portion occupied by the display media 3, a portion occupied by the partition wall 4 and a sealing portion of the information display panels, in other words, the space described above indicates a gas portion that is brought in contact with the display media. Any type of gas can be used as the gas in the spaces described above, provided that humidity thereof falls within the humidity range described above. However, it is preferable to use a dried air, dried nitrogen, dried argon, dried helium, dried carbon dioxide, dried methane and the like. This gas needs to be sealed in the information display panel so as to maintain the humidity inside thereof, and it is important, for example, to fill the display media and build the information display panels under a predetermined humidity environment, and then, to apply the seal material and sealing method so as to prevent the wet from intruding from the outside.

The distance between the substrates of the information display panel employing the particle for a display medium according to the present invention is set such that the display medium can move and contrast can be maintained, and generally, is adjusted in the range of 10 μm to 500 μm, preferably, in the range of 10 μm to 200 μm. In the case of the information display panel in which the chargeable particles are moved, the distance is adjusted to be in the range of 10 μm to 100 μm, preferably, in the range of 10 μm to 50 μm.

Further, it is preferable that the volume ratio of the display media relative to the space filled with gas between the opposing substrates is in the range of 5% to 70%, and more preferably, in the range of 5% to 60%. Note that, in the case where the ratio exceeds 70%, movement of the display medium is adversely affected, and on the other hand, in the case where the ratio is less than 5%, the contrast is likely to become unclear.

Hereinafter, a description will be made for a method of manufacturing the particle for a display medium as the examples of the present invention. However, the present invention is not limited to the following examples.

[Manufacturing of negatively electrified particle]

As a negatively electrified mother particle, a negatively electrified mother particle A having an average particle diameter R0 = 8.1 $\mu$m was obtained by: melting and mixing 100 parts by weight of cyclo olefin resin (Zeonex 330R made by Zeon Corporation) and 100 parts by weight of titanium dioxide (Tipaque CR-90 made by Ishihara Sangyo Kaisha, LTD.) using a twin screw kneader; finely grinding the mixture with a jet mill (lab jet mill IDS-LJ made by Nippon Pneumatic Mfg. Co., Ltd.); classifying the mixture using a classification apparatus (MDS-2 made by Nippon Pneumatic Mfg. Co., Ltd.); and, melting and spheroidizing using a melting-spheroidizing unit (MR-10 made by Nippon Pneumatic Mfg. Co., Ltd.).

As the external additive used for the particle A described above, a larger external additive and a smaller external additive for the negatively electrified white particle were prepared as shown in Table 1. Then, these additives were mixed and attached on a surface of the particle A, thereby manufacturing a negatively electrified white particle A1.

[Table 1]

| Sample of negatively electrified white external additive | | Primary particle diameter |
| --- | --- | --- |
| Smaller particle diameter | Degussa corporation (Germany): HMDS-processed fumed silica: RX300 | 7 nm |
| Larger particle diameter (1) | Degussa corporation (Germany): HMDS-processed fumed silica: RX200 | 12 nm |
| Larger particle diameter (2) | Degussa corporation (Germany): HMDS-processed fumed silica: NX90 | 20 nm |
| Larger particle diameter (3) | Degussa corporation (Germany): HMDS-processed fumed silica: NAX50 | 30 nm |
| Larger particle diameter (4) | Degussa corporation (Germany): HMDS-processed fumed silica: RX50 | 40 nm |
| Larger particle diameter (5) | NIPPON SHOKUBAI CO., LTD.: Spherical silica S10 HMDS process | 100 nm |
| Larger particle diameter (6) | NIPPON SHOKUBAI CO., LTD.: Spherical silica S20 HMDS process | 200 nm |

(continued)

| Sample of positively electrified black external additive | | Primary particle diameter | Mixing ratio (Total amount of external additive, mother particle weight 5%) |
|---|---|---|---|
| Smaller particle diameter | Wacker corporation (Germany): Aminosilane + PDMS process: H3050 | 8 nm | 60% |
| Larger particle diameter | Degussa corporation (Germany): Aminosilane + PDMS process: NA50Y | 30 nm | 40% |

It should be noted that the distribution of the grain sizes of the external additives was measured using a transmission electron microscope (TEM). Image-capturing was performed at a resolution at which primary particle diameters of the external additive can be recognized, and for a large number of primary particles, the primary particle diameters were measured using the captured images, thereby obtaining the statistical distribution thereof. On the assumption that the primary particle has a spherical shape, the particle diameters of the external additives were obtained on the basis of the average volume of the primary particle as representative values. Note that, in the case where the external additive has an average particle diameter in the range of 7 nm to 8nm, in general, the primary particle of 10 nm or more accounts for 30 wt% or lower of the entire primary particles, and the primary particle of 12 nm or more accounts for 10 wt% or lower of the entire primary particles. Further, in the case where the external additive has an average particle diameter of 20 nm or more, the primary particle of 10 nm or lower accounts for 10 wt% of the entire primary particles.

External additives were prepared by mixing smaller particles and larger particles shown in Examples 1 to 8 as the present examples and Comparative Examples 1 to 29 as comparative examples.
The external additives described above were combined with the positively electrified mother particles manufactured described below, and the combined particles were sealed between substrates 1 and 2 (glass substrates) of a display panel to manufacture information display panels, which were then evaluated in terms of contrast.

[Manufacturing of positively electrified particle]

As a positively electrified mother particle, a positively electrified mother particle B having an average particle diameter of 9.1 μm was prepared by: dispersing, using a sand mill, 3 parts by weight of a nigrosine compound (BONTRON N-07 made by Orient Chemical Industries Co., Ltd.) as the charging control agent having the positive electrification and 5 parts by weight of carbon black (Special Black 5 made by Degussa Co., Ltd.) as the black colorant in 65 parts by weight of methyl methacrylate (Kanto Chemical reagents) and 35 parts by weight of ethylene glycol dimethacrylate (Wako Pure Chemical Industries reagents) as a polyfunctional monomer having multiple polymerization reaction groups in each molecule thereof; dissolving 2 parts by weight of azobisisobutyronitrile (V-60 made by Wako Pure Chemical Industries) as an initiator of polymerization; suspending and polymerizing the thus obtained solution in purified water having 0.5 wt% of sodium polyoxyethylene alkyl ether sulfate (Latemul E-118B made by Kao Corporation) as the surface-active agent; filtering and drying the thus obtained solution; and, then, classifying it using a classification apparatus (MDS-2 made by Nippon Pneumatic Mfg. Co., Ltd.).
To the particle B described above, larger and smaller silica fine particles were added as the external additives, thereby manufacturing a positively electrified black particle B2. These particles are shown in the lower portion of Table 1. The ratio of H3050 made by Wacker serving as the smaller diameter particle is 3 wt% relative to the mother particle, and the ratio of NA50Y made by Degussa serving as the larger diameter particle is 2 wt% relative to the mother particle.

Information display panels were prepared by mixing the equivalent amounts of the white particle A1 and the black particle B2; frictionally charging the mixture; and, filling the charged particles in a cell formed by a glass substrate subjected to an internal ITO process and connected to a power supply and a copper substrate with a volume occupancy of 30%, the substrates being disposed through a spacer having a size of 100 μm. By connecting the ITO glass substrate and the copper substrate with the power supply and applying a direct-current voltage in such a manner that the ITO glass substrate is a lower potential and the copper substrate is a higher potential, the black particle and the white particle move to the lower-potential electrode and the higher-potential electrode, respectively.

Since the black particle is positively electrified and the white particle is negatively electrified, a black display can be observed through the glass substrate. Then, by reversing the electric potentials of the applied voltage, the respective particles move to the opposite directions, and then, a white display can be observed.

In this specification, evaluation was made by setting the distance between the electrodes disposed to the information display panel to 40 μm, and driving the panel with a voltage of 70V. The display performance was evaluated by measuring the optical density, and the larger difference between the black display and the white display of the panel display renders the better display performance. In the measurement, RD19 by Gretag Macbes (Germany) was used for an optical density measurement unit. In this specification, as a quantitative value of the difference of black and white display performance, the contrast is defined as follows:

$$\text{Contrast} = 10^{(\text{black density - white density})}$$

More specifically, the contrast value was obtained by using the difference between the black density and the white density as an index number. The contrast value > 5 is defined as "acceptable ○."

As shown in Table 2 that collectively shows the results of Examples 1 to 8 and Comparative Examples 1 to 29, Examples 1 to 8 are evaluated as "acceptable (○)" in both of the initial contrast and the contrast after rewriting by 200 pages, whereas Comparative Examples 1 to 29 are evaluated as "not acceptable (×)" in the initial contrast or the contrast after the endurance test. It should be noted that Table 3 shows the values of initial contrast, and Table 4 shows the values after the 200-pages rewriting endurance.

[Table 2]

| | Design of negatively electrified white external additive | Mixing ratio | Initial display | Endurance display | Acceptable/ Not acceptable |
|---|---|---|---|---|---|
| Example 1 | Smaller diameter particle + Larger diameter particle (2) | 30% | 8.3 | 6.7 | ○ |
| Example 2 | | 80% | 6.5 | 6.1 | ○ |
| Example 3 | Smaller diameter particle + Larger diameter particle (3) | 20% | 7.7 | 5.5 | ○ |
| Example 4 | | 80% | 6.1 | 5.4 | ○ |
| Example 5 | Smaller diameter particle + Larger diameter particle (4) | 20% | 10.5 | 5.9 | ○ |
| Example 6 | | 80% | 5.8 | 5.4 | ○ |
| Example 7 | Smaller diameter particle + Larger diameter particle (5) | 20% | 7.1 | 5.3 | ○ |
| Example 8 | | 70% | 5.3 | 5.9 | ○ |
| Comparative Example 1 | Smaller diameter particle | - | 8.3 | 3.1 | × |

(continued)

| | Design of negatively electrified white external additive | Mixing ratio | Initial display | Endurance display | Acceptable/ Not acceptable |
|---|---|---|---|---|---|
| Comparative Example 2 | Smaller diameter particle + Larger diameter particle (1) | 10% | 8.2 | 4.2 | × |
| Comparative Example 3 | | 20% | 9.9 | 3.9 | × |
| Comparative Example 4 | | 30% | 10.2 | 4.8 | × |
| Comparative Example 5 | | 40% | 9.5 | 4.9 | × |
| Comparative Example 6 | | 50% | 8.9 | 4.7 | × |
| Comparative Example 7 | | 60% | 9.5 | 4.5 | × |
| Comparative Example 8 | | 70% | 9.5 | 4.1 | × |
| Comparative Example 9 | | 80% | 8.3 | 3.7 | × |
| Comparative Example 10 | | 90% | 7.4 | 3.3 | × |
| Comparative Example 11 | | 100% | 6.5 | 2 | × |
| Comparative Example 12 | Smaller diameter particle + Larger diameter particle (2) | 20% | 7.9 | 4.9 | × |
| Comparative Example 13 | | 90% | 4.9 | 4.7 | × |
| Comparative Example 14 | Smaller diameter particle + Larger diameter particle (3) | 10% | 7.6 | 4.1 | × |
| Comparative Example 15 | | 90% | 4.3 | 4.8 | × |
| Comparative Example 16 | Smaller diameter particle + Larger diameter particle (4) | 10% | 9.8 | 3.9 | × |
| Comparative Example 17 | | 90% | 4.2 | 3.9 | × |
| Comparative Example 18 | Smaller diameter particle + Larger diameter particle (5) | 10% | 6.5 | 4.9 | × |
| Comparative Example 19 | | 80% | 4.3 | 4.3 | × |

(continued)

| | Design of negatively electrified white external additive | Mixing ratio | Initial display | Endurance display | Acceptable/ Not acceptable |
|---|---|---|---|---|---|
| Comparative Example 20 | Smaller diameter particle + Larger diameter particle (6) | 10% | 5.5 | 2.9 | × |
| Comparative Example 21 | | 20% | 4.7 | 3.4 | × |
| Comparative Example 22 | | 30% | 4.9 | 3.5 | × |
| Comparative Example 23 | | 40% | 4.5 | 3.8 | × |
| Comparative Example 24 | | 50% | 4.5 | 4.2 | × |
| Comparative Example 25 | | 60% | 4.2 | 4.4 | × |
| Comparative Example 26 | | 70% | 3.3 | 4.1 | × |
| Comparative Example 27 | | 80% | 3.9 | 3.9 | × |
| Comparative Example 28 | | 90% | 3.1 | 3.7 | × |
| Comparative Example 29 | | 100% | 3.1 | 2.3 | × |

[Table 3]

| Initial display performance (contrast performance)Mixing rate by weight of larger diameter particle (main material: RX300), weigh of 3% of mother particle in total amount of external additive | | | | | | | | | | | |
|---|---|---|---|---|---|---|---|---|---|---|---|
| Design of negatively electrified white external additive | 0% | 10% | 20% | 30% | 40% | 50% | 60% | 70% | 80% | 90% | 100% |
| Smaller diameter particle | 8.3 | | | | | | | | | | |
| Smaller diameter particle + Larger diameter particle (1) | - | 8.2 | 9.9 | 10.2 | 9.5 | 8.9 | 9.5 | 9.5 | 8.3 | 7.4 | 6.5 |

(continued)

| Initial display performance (contrast performance)Mixing rate by weight of larger diameter particle (main material: RX300), weigh of 3% of mother particle in total amount of external additive | | | | | | | | | | | |
| Design of negatively electrified white external additive | 0% | 10% | 20% | 30% | 40% | 50% | 60% | 70% | 80% | 90% | 100% |
|---|---|---|---|---|---|---|---|---|---|---|---|
| Smaller diameter particle + Larger diameter particle (2) | - | 7.7 | 7.9 | 8.3 | 8.7 | 9.1 | 8 | 7.5 | 6.5 | 4.9 | 4.5 |
| Smaller diameter particle + Larger diameter particle (3) | - | 7.6 | 7.7 | 7.9 | 8.2 | 8.8 | 7.5 | 7.3 | 6.1 | 4.3 | 3.9 |
| Smaller diameter particle + Larger diameter particle (4) | - | 9.8 | 10.5 | 11.5 | 9.8 | 8.4 | 7.3 | 7.1 | 5.8 | 4.2 | 3.3 |
| Smaller diameter particle + Larger diameter particle (5) | - | 6.5 | 7.1 | 6.9 | 6.4 | 6.1 | 5.5 | 5.3 | 4.3 | 3.3 | 2.9 |
| Smaller diameter particle + Larger diameter particle (6) | - | 5.5 | 4.7 | 4.9 | 4.5 | 4.5 | 4.2 | 3.3 | 3.9 | 3.1 | 3.1 |

[Table 4]

| Duration display performance (2 million pages, contrast performance) | | | | | | | | | | | |
|---|---|---|---|---|---|---|---|---|---|---|---|
| Design of negatively electrified white external additive | 0% | 10% | 20% | 30% | 40% | 50% | 60% | 70% | 80% | 90% | 100% |
| Smaller diameter particle | 3.1 | | | | | | | | | | |
| Smaller diameter particle + Larger diameter particle (1) | - | 4.2 | 3.9 | 4.8 | 4.9 | 4.7 | 4.5 | 4.1 | 3.7 | 3.3 | 2 |
| Smaller diameter particle + Larger diameter particle (2) | - | × | 4,9 | 6.7 | 8 | 8.2 | 9.1 | 7.5 | 6.1 | 4.7 | × |
| Smaller diameter particle + Larger diameter particle (3) | - | 4.1 | 5.5 | 6 | 6.3 | 6.5 | 7.2 | 6.5 | 5.4 | 4.8 | × |
| Smaller diameter particle + Larger diameter particle (4) | - | 3.9 | 5.9 | 6.5 | 7.3 | 8 | 9.1 | 8 | 5.4 | 3.9 | × |
| Smaller diameter particle + Larger diameter particle (5) | - | 4.9 | 5.3 | 5.4 | 6.4 | 6.9 | 6.4 | 5.9 | 4.3 | 3.6 | × |
| Smaller diameter particle + Larger diameter particle (6) | - | 2.9 | 3.4 | 3.5 | 3.8 | 4.2 | 4.4 | 4.1 | 3.9 | 3.7 | 2.3 |

It should be noted that it is confirmed that, in the case where the content of the larger-diameter external additive is 20 wt% or lower, the particles stick together after the endurance test, and the display performance deteriorates. In the case where the content is 80 wt% or more, the initial flowability deteriorates, and the particles stick together in a similar manner. Further, from Examples described above, it can be confirmed that it is preferable that the particle diameter of the larger-diameter particle is in the range of 20 nm to 100 nm with the combination of the smaller-diameter particle (7 nm to 8 nm).

In Examples described above, use of the primary particle having a diameter of 7 nm as the first external additive particle having the smaller particle diameter was given as an example. The present inventor made an additional test in a similar manner using the first external additive particle having the smaller particle diameter of 8 nm, and obtained the results similar to the results described above.

Further, in the description above, the entire combination ratio of the external additive was 3 wt% relative to the mother particle. The present inventor further made an additional test in a similar manner using samples having the entire combination ratio of the external additive of 2 wt% and 5 wt%, and obtained the results similar to the above-described results even in the range of 2 wt% to 5 wt%.

These are detailed descriptions of the preferred embodiment of the present invention, but the present invention is not limited to the specific embodiments. Various changes and modifications may be possible within the scope of the present invention described in CLAIMS.

INDUSTRIAL APPLICABILITY

An information display panel that employs the combined-type particle for a display medium according to the present invention is suitable for use in a display unit of various electronic devices including: a display unit of a mobile device such as a laptop computer, an electronic notebook, a mobile-type information device called a PDA (personal digital assistance), a cell phone and a handy terminal; an electronic paper such as an electronic book, electronic newspaper and an electronic manual (electronic instruction manual), a message board such as a billboard, a poster, a blackboard and a whiteboard, an electronic desktop calculator, an electrical appliance, a display of an automobile part and the like; a card display unit of a point card, an IC card and the like; a display unit of an electronic advertisement, an information board, an electronic POP (point of presence, point of purchase advertizing), an electronic price tag, an electronic shelf-tag, an electronic music score and a RFID device; and, a POS terminal, a car-navigation device, clock and the like. Further, the information display panel according to the present invention is suitable for use as a display panel in which a display is rewritten by external electric-field forming means, or a display panel in which a display is rewritten by connecting the panel with external display rewriting means (so-called rewritable paper).

It should be noted that various types of driving methods can be used as a driving method of the information display panel, which includes: a simple matrix driving method and a static driving method in which no switching element is used in the panel itself; an active matrix driving method employing a three-terminal switching element typified by a thin film transistor (TFT) and a two-terminal switching element typified by a thin film diode (TFD); and, an external electric-field driving method employing the external electric-field forming means.

## Claims

1. A particle for a display medium that can be used in an information display panel in which a display medium having an optical reflectivity and an electrification property is sealed between two substrates, at least one of which substrates is transparent; electrification is applied to the display medium to move the display medium, thereby to display an information image, wherein
   an external additive is attached to a surface of a mother particle serving as a main body of the particle, and,
   the external additive has a first external additive particle having a smaller particle diameter formed such that an average particle diameter falls in a range of 7 nm to 8 nm and 80 wt% or more of the entire first external additive particle has a particle diameter falling within $\pm 2$nm of the average particle diameter, and a second external additive particle having a larger particle diameter formed such that 10 wt% or lower of the entire second external additive particle has a particle diameter of 10 nm or lower.

2. The particle for a display medium according to claim 1, wherein
   a mixing ratio of the second external additive particle is in the range of 20 wt% to 80 wt% relative to the entire external additive in the case where the average particle diameter of the second external additive is in the range of 30 nm to 40 nm.

3. The particle for a display medium according to claim 1, wherein
   a mixing ratio of the second external additive particle is in the range of 30 wt% to 80 wt% relative to the entire external additive in the case where the average particle diameter of the second external additive is not less than 20 nm and less than 30 nm.

4. The particle for a display medium according to claim 1, wherein
   a mixing ratio of the second external additive particle is in the range of 20 wt% to 70 wt% relative to the entire external additive in the case where the average particle diameter of the second external additive is more than 40 nm and not more than 100 nm.

5. The particle for a display medium according to claim 1, wherein
   an entire combination ratio of the external additive is in the range of 2 wt% to 5 wt% relative to the mother particle.

6. The particle for a display medium according to any one of claims 1 to 5, wherein
   the first external additive particle and the second external additive particle are fine particles made of silica.

7. An information display panel employing the particle for a display medium according to any one of claims 1 to 6.

# FIG. 1

(a)

3Wa                6    2

}3W

}3B

4    3Ba    TFT    5    1

(b)

3Ba                6    2

}3B

}3W

4    3Wa    TFT    5    1

# FIG. 2

(a)

(b)

**INTERNATIONAL SEARCH REPORT**

| International application No. |
| --- |
| PCT/JP2010/003618 |

**A. CLASSIFICATION OF SUBJECT MATTER**
*G02F1/167*(2006.01)i, *G02F1/17*(2006.01)i

According to International Patent Classification (IPC) or to both national classification and IPC

**B. FIELDS SEARCHED**

Minimum documentation searched (classification system followed by classification symbols)
G02F1/167, G02F1/17

Documentation searched other than minimum documentation to the extent that such documents are included in the fields searched
Jitsuyo Shinan Koho          1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2007-171482 A  (Bridgestone Corp.),<br>05 July 2007 (05.07.2007),<br>paragraphs [0019] to [0021], [0040] to [0041],<br>[0049] to [0065]; fig. 4<br>(Family: none) | 1-5,7<br>6 |
| A | JP 2008-26702 A  (Bridgestone Corp.),<br>07 February 2008 (07.02.2008),<br>paragraphs [0045] to [0048]<br>(Family: none) | 1-7 |
| A | JP 2008-129322 A  (Bridgestone Corp.),<br>05 June 2008 (05.06.2008),<br>paragraphs [0051] to [0055]; fig. 6<br>(Family: none) | 1-7 |

☐  Further documents are listed in the continuation of Box C.          ☐  See patent family annex.

| | |
| --- | --- |
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>23 June, 2010 (23.06.10) | Date of mailing of the international search report<br>06 July, 2010 (06.07.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

- JP 2006064815 A